# EUROPEAN PATENT SPECIFICATION

(11) **EP 3 656 742 B1**
(45) Date of publication and mention of the grant of the patent: **26.05.2021**
(21) Application number: 18208337.8
(22) Date of filing: 26.11.2018
(51) Int. Cl.: C02F 1/00, E03B 7/07, E03C 1/10

(54) **BACKFLOW SAFEGUARD UNIT**
RÜCKFLUSSSCHUTZEINHEIT
UNITÉ DE PROTECTION ANTIREFOULEMENT

(43) Date of publication of application: 27.05.2020
(73) Proprietor: Brita GmbH, 65232 Taunusstein (DE)
(72) Inventor: SAUERBIER, Knut, 64658 Fürth (DE)

(56) References cited:
- US-A1- 2003 036 033

## Description

The present invention relates to a backflow safeguard unit and a combination of a water appliance and a backflow safeguard unit.

Many water appliances are directly connected to a permanent water supply, e.g. the public water network. Examples for household water appliances are water dispensers, carbonators, washing machines, and dishwashers. Water appliances may also be found in locations where high precautions are generally necessary such as chemical plants and hospitals.

It is necessary to protect the water supply against backflow pollution, especially when dealing with appliances posing a potential threat to the water supply present in chemical plants, hospitals and the like. In fact, certain rules exist to protect against pollution of potable water installations such as DIN EN 1717:2011-08, which also contains general requirements of devices to prevent pollution by backflow. A further norm (DIN 1988-100:2011-08) exists containing codes of practice for drinking water installations. Finally, DIN EN 13959:2005-01 contains details relating to anti-pollution check valves.

Backflow pollution can occur when the pressure in the water supply drops, e.g. due to a pipe of the water network bursting. In such an event, it would be generally possible for water coming from the water appliance to flow back into the water network. Water present in the pipes between the water appliance and the connection to the water supply may also backflow.

The above-mentioned norms contain rules for preventing such backflow. These rules differ depending on the water quality that could backflow. For water of categories 1 and 2 an anti-pollution check valve is sufficient. Such an anti-pollution check valve is often paired with a filter unit for filter water flowing from the water supply to the water appliance. The filter unit treats the water supplied to the water appliance in order to protect the user of the water appliance or the appliance itself. Such an arrangement is known from DE 20 2015 103 694 U1 where an anti-pollution check valve is paired with an adsorption filter comprising a filter material containing an electrokinetic, in particular electropositive, potential (zeta potential) in an aqueous environment.

The worst water according to the norms is water of category 5, which is water exhibiting a health risk for humans due to the presence of microbial or viral agents of contagious diseases. For appliances running the risk of containing water of said category the norms currently accept only one backflow preventing principle, the air gap. US2003/0036033 A1 discloses a water delivery and filtration system having backflow preventing means using the principle of the air gap.

An air gap is defined in the norms as a physical distance between the lower edge of the water inlet and the highest possible or critical water line of an apparatus, an installation, a drainage pipe or a ventilation opening of the water appliance. Such an air gap must be present between the water supply and the water appliance.

Water flowing through the air gap will lose the pressure present in the water supply, making a pump or the like necessary for conveying the water further on to the water appliance. The surrounding area of the air gap must additionally be kept clear of pollution and contamination so that the water supplied to the water appliance is not adversely affected. These measures lead to high cost making an air gap undesirable.

It is therefore the object of the invention to provide an alternative to the air gap. This object is achieved by a backflow safeguard unit according to claim 1 and also by a combination of a water appliance and a backflow safeguard unit according to claim 14.

The backflow safeguard unit comprises a first duct having a first end connectable to a water supply and a second end connectable to a water appliance and also comprises a first safety unit located in said first duct with a first filter unit for filtering water flowing from the first end to the second end and a first anti-pollution check valve for preventing water from flowing from the second end to the first end. The backflow safeguard unit is characterized by a first junction located in the first duct between the first end and the first anti-pollution check valve and a second junction located in the first duct between the first anti-pollution check valve and the second end, a second duct connecting the first junction and the second junction, and a second filter unit in the second duct for filtering water flowing from the second junction to the first junction and a second anti-pollution check valve in the second duct for preventing water from flowing from the first junction to the second junction.

In the past, air gaps were installed in order to prohibit the backflow of water to the water supply. As described above, air gaps are primarily used when dealing with water of category 5. Said water can potentially contain microbial or viral agents of contagious diseases, which is why in the past said water was to be prohibited by an air gap from flowing back. The inventor of the present invention has found that a backflow occurring under controlled circumstances is to be preferred in many instances and now proposes to allow such a backflow by providing a bypass with a second filter unit for filtering the water flowing back. Under normal circumstances the first anti-pollution check valve permits water to flow from the first end to the second end of the first duct. If the pressure in the water supply drops, the first anti-pollution check valve closes, thereby preventing water from flowing back to the water supply. Depending on the water appliance attached to the second end of the duct, the first anti-pollution check valve is put under large pressure by the water located between the first anti-pollution check valve and the second end, e.g. the water coming from the water appliance. With the invention, said water may flow around (bypass) the first anti-pollution check valve via the second duct. In said second duct the water is filtered by the second filter unit so that the water reaching the water supply is no longer harmful.

By allowing a water backflow, an air gap is no longer necessary since the water flowing back is filtered before reaching the water supply. The adverse effects of air gaps mentioned above can thus be avoided.

Filter units generally have two possible flow directions (back and forth). Even though filter units may have a filtration effect in both of these directions, one direction is usually preferred and the filter unit is configured for said preferred direction. For example, a filter unit having a multitude of hollow fibers is usually installed so that water flows from the inside of the hollow fibers outwards through multiple pores in the hollow fibers, making this the preferred direction. In the less preferred opposite direction, water would have to flow from the outside through said pores into the inside of the fibers, which would only lead to the fibers being compressed thus closing the pores and obstructing the flow. Water flowing through a filter unit in the less preferred direction can also damage the filter unit. The first filter unit is advantageously arranged so that its preferred direction of flow points from the first junction to the second junction. The second filter unit is advantageously arranged so that its preferred direction of flow points from the second junction to the first junction.

Unless otherwise specified, terms such as "downstream" make reference to the regular flow of water (first end to second end)

Preferably, the first filter unit is located downstream of the first anti-pollution check valve.

The second anti-pollution check valve is located in the second duct behind the second filter unit in the direction travelling from the second junction to the first junction.

The second junction is located in the second duct downstream of the first junction.

During regular usage solid matter held back by the first filter unit can accumulate on the water supply side of said first filter unit. Among this solid matter microbial and viral agents may also be present. Such agents can be present in the water flowing from the water supply to the water appliance in very small quantities. Through accumulation and eventually growth, larger amounts may be present when a pressure drop in the water supply occurs. Water flowing back will likely carry along said solid matter, thereby posing a threat to the water supply.

The second junction is therefore preferably located in the first duct between the first anti-pollution check valve and the first filter unit. This way the water containing the solid matter is guided into the second duct and consequentially filtered by the second filter unit.

If it is desired that the solid matter filtered out by the first filter unit does not reach the second filter unit (i.e. to prevent clogging of the second filter unit), it is also possible to arrange the first filter unit in the first duct between the first anti-pollution check valve and the second junction. Solid matter will then be trapped between the first anti-pollution check valve and the second junction.

The second duct is preferably only used when water is flowing back to the water supply. This is achieved by two measures, which may be applied independently.

According to the first measure the second anti-pollution check valve is located in the second duct next to the first junction. In other words: the second anti-pollution check valve is located at the end of the second duct closer to the water supply. This way no water coming from the first duct can enter the second duct via the first junction, keeping the second duct essentially dry during regular usage.

The second measure comprises a throttle located in the second duct next to the second junction. The first filter unit in a way also presents a throttle for the water flowing from the first end to the second end of the first duct, because the flow cross-section is reduced by the first filter unit. Without said throttle water may be pushed into the second duct through the second junction. The throttle arranged in the second duct prevents or at least minimizes this effect. Preferably, the throttle has a smaller flow cross-section than the first filter unit. The throttle is preferably a reduction pipe.

When the pressure in the water supply is back to normal, no direct measures are necessary for the backflow safeguard unit to fulfil its normal duty. When the pressure increases, the second anti-pollution check valve will close shut and the first anti-pollution check valve will open up. It is possible that water contained in the second duct will enter into the first duct via the second junction. However, such water will be filtered by the first filter unit before reaching the water appliance. Over time, the second duct will dry up.

At least one of the filter units is preferably a mechanical filter unit. The mechanical filter unit preferably has a pore size < 80 µm. This way, unwanted substances are filtered out efficiently. Independently, the mechanical filter unit may have a pore size ≥ 0,2 µm. Filters with such a pore size are usually sufficient for filtering out unwanted substances and cheaper than a filter with an even smaller pore size. Such a mechanical filter unit may particularly be used as the first filter unit.

At least one of the filter units is preferably a microbiological filter unit. Such a filter unit is able to filter out microbial and viral agents. Accordingly, such a filter unit may particularly be used as the second filter unit. The second filter unit preferably has a pore size of < 0.2 µm and also preferably > 2 nm.

In general, the pore size of the second filter unit is preferably smaller than that of the first filter unit as it is of utmost importance to protect the water supply of harmful substances.

Of course, the filter units may also be identical. Using identical parts in an assembly is often cost efficient, thereby making such an arrangement somewhat advantageous. It is most preferable to use microbiological filter units as both the first filter unit and the second filter unit.

Anti-pollution check valves are categorized in the norms mentioned above in two ways: firstly, there are single and double anti-pollution check valves; secondly, there are controllable and non-controllable anti-pollution check valves. These terms are to be understood as defined in DIN EN 1717:2011-08. Due to the two categories, a total of four types is available.

At least one of the anti-pollution check valves of the invention is preferably a single anti-pollution check valve. Such an anti-pollution check valve is cheaper reducing the overall cost of the safeguard unit. Thanks to the bypass created by the invention, the inventor has found that a single anti-pollution check valve is sufficient for both of the anti-pollution check valves.

At least one of the anti-pollution check valves is a non-controllable anti-pollution check valve. Again, this type is cheaper than a controllable one, reducing the overall cost of the invention. The inventor has found that the non-controllable anti-pollution check valve is sufficient. If an inspection of the anti-pollution check valve is desired, controllable anti-pollution check valves may also be used.

As mentioned above, it is generally preferable to use like parts in an assembly. Accordingly, the anti-pollution check valves are preferably identical.

The object of the invention is also solved by a combination of a water appliance and a backflow safeguard unit as described above.

The present invention will be described in detail with reference to the examples shown in the drawing, in which the following is shown:
- Figure 1:: a first embodiment of the backflow safeguard unit in combination with a water appliance;
- Figure 2:: a second embodiment of the backflow safeguard unit in combination with a water appliance; and
- Figure 3:: a third embodiment of the backflow safeguard unit in combination with a water appliance.

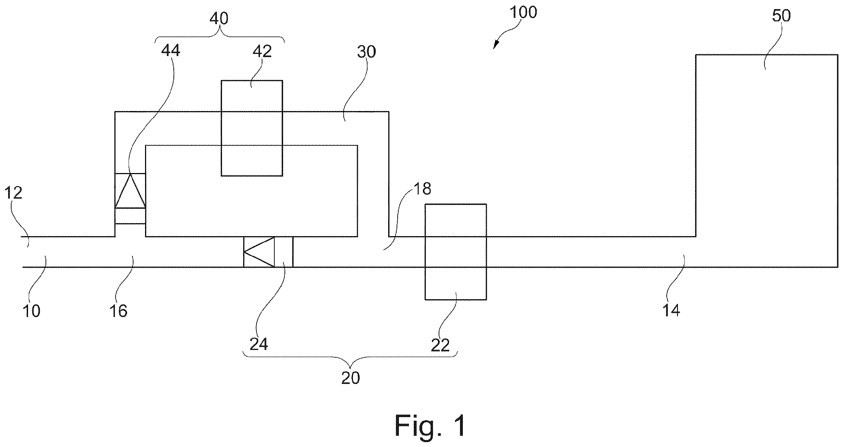

The backflow safeguard unit 100 shown in figure 1 comprises a first duct 10 running from a first end 12 to a second end 14. The first end 12 can be attached to a water supply (not shown here). A water appliance 50 is attached to the second end 14 of the first duct 10.

During normal usage, water coming from the water supply will enter the first duct 10 at the first end 12 and flow further towards the second end 14. In this direction a first safety unit 20 comprising (in this order) a first anti-pollution check valve 24 and a first filter unit 22 is arranged in the first duct 10.

The first anti-pollution check valve 24 permits water to flow in the mentioned direction and hinders water from flowing in the opposite direction.

The first filter unit 22 is a mechanical filter. Water flowing from the first end 12 to the second end 14 is filtered by the filter unit 22 so that unwanted substances such as small particles and/or microorganisms do not enter the water appliance 50.

A first junction 16 is located in the first duct 10 between the first end 12 and the first anti-pollution check valve 24. A second junction 18 is located in the first duct 10 between the first anti-pollution check valve 24 and the first filter unit 22. The first junction 16 and the second junction 18 are connected to each other via a second duct 30. The second duct 30 creates a bypass around the first anti-pollution check valve 24.

A second safety unit 40 comprising a second anti-pollution check valve 44 and a second filter unit 42 is arranged in the second duct 30. The second anti-pollution check valve 44 is located directly next to the first junction 16 and hinders water from flowing from the first duct 10 into the second duct 30 via the first junction 16. On the other hand, water flowing in the opposite direction is permitted to flow through the second anti-pollution check valve 44. The first anti-pollution check valve 24 and the second anti-pollution check valve 44 are identical, both being a single non-controllable anti-pollution check valve in accordance with DIN EN 1717:2011-08.

The second filter unit 42 is located between the second anti-pollution check valve 44 and the second junction 18. In the embodiment shown the second filter unit 42 is a microbial filter having a pore size < 0.2 µm.

If the pressure in the water supply drops the anti-pollution check valve 24 will prevent water from flowing back from the second end 14 to the first end 12. However, said water will be able to flow into the second duct 30 via the second junction 18. While doing so, it is likely that the water will carry along solid matter previously held back by the first filter unit 22. In the second duct 30 the water will pass the second filter unit 42, where it is filtered. Since the second filter unit 42 is a microbial filter viral and microbial agents present in said solid matter will be filtered out as well, so that the water passing through the second filter unit does not pose a threat for the water supply.

The water will then pass through the second anti-pollution check valve 44 and enter back into the first duct 10 having bypassed the first anti-pollution check valve 24. Due to the pressure drop in the water supply, it is possible that water will enter into said water supply (e.g. the community water system). However, said water poses no threat to the water supply, having been filtered by the second filter unit 42 on its way.

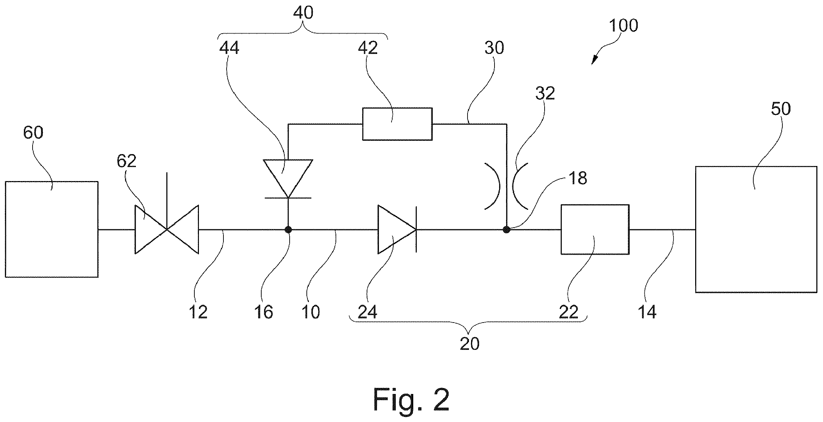

The second embodiment of a backflow safeguard unit 100 shown in the schematic plan that is Figure 2 is similar to the first embodiment. The backflow safeguard unit 100 comprises a first duct 10 with a first end 12, a first junction 16, a first anti-pollution check valve 24, a second junction 18, a first filter unit 22 and a second end 14 in said order.

The second end 14 is attached to a water appliance 50. The first end 12 is connected to a water supply 60 via a valve 62.

A throttle 32 is arranged in the second duct 30 right next to the second junction 18. Water flowing from the first end 12 to the second end 14 will encounter an obstacle in the form of the first filter 22. The first filter 22 has a throttle effect for said water so that water could generally be pushed into the second duct 30. The throttle 32 has a smaller flow cross-section than the first filter 22, thereby making it harder for water to enter into the second duct 30.

As with the first embodiment, if the water pressure in the water supply 60 drops, e.g. due to a pipe bursting in the community water network, the anti-pollution check valve 24 will close shut preventing water coming from the water appliance 50 from flowing upstream towards the first end 12. Instead, said water will be able to bypass the anti-pollution check valve 24 via the second duct 30 being filtered on the way by the filter unit 42 and flowing through the second anti-pollution check valve 44. Said water may then flow back to the water supply 60 without posing a threat due to its filtration by microbiological filter unit 42.

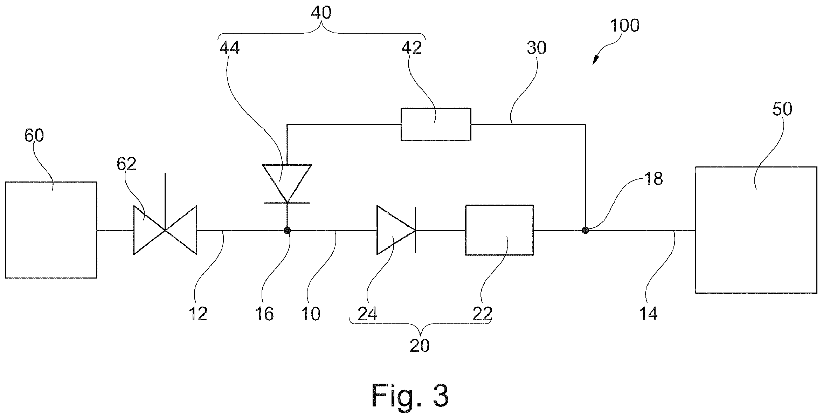

The third embodiment of the backflow safeguard unit 100 shown in the schematic plan in figure 3 comprises the same components as the second embodiment: a first duct 10 having a first end 12 and a second end 14, the first end 12 being connected to the water supply 60 via valve 62 and the second end 14 being connected to water appliance 50. A first anti-pollution check valve 24 and a first filter unit 22 are provided between the first end 12 and the second end 14 in said order in the direction of flow.

The second duct 30 provides a bypass for the first duct 10 being connected to the first duct 10 at a first junction 16 and a second junction 18. The first junction 16 is located between the first end 12 and the first anti-pollution check valve 24 in the first duct 10.

The second junction 18 is located downstream of the first filter unit 22. In other words, the second junction 18 is located between the first filter unit 22 and the second end 14. With such an arrangement particles filtered out by the first filter unit 22 will not be able to flow to the second filter unit 42 so that when a backflow occurs water is not obstructed by these particles when flowing into and through the second duct 30. Since the first anti-pollution check valve 24 obstructs the flow of water through the first duct 10 in case of a backflow, the water in the section of the first duct 10 reaching from the first anti-pollution check valve 24 to the second junction 18 will almost stand still. The backflowing water will therefore flow into the second duct 30 to the second anti-pollution check valve 44 being filtered by the second filter unit 42 on its way. The water will then pass through the second anti-pollution check valve 44 and flow further to the valve 62 and back into the water supply 60.

### List of references

- 10: first duct
- 12: first end
- 14: second end
- 16: first junction
- 18: second junction

- 20: first safety unit
- 22: first filter unit
- 24: first anti-pollution check valve

- 30: second duct
- 32: throttle

- 40: second safety unit
- 42: second filter unit
- 44: second anti-pollution check valve

- 50: water appliance

- 60: water supply
- 62: valve

- 100: backflow safeguard unit

## Claims

1. Backflow safeguard unit (100) for a water appliance (50) with
a first duct (10) having a first end (12) connectable to a water supply (60) and a second end (14) connectable to the water appliance (50) and with
a first safety unit (20) located in said first duct (10) with a first filter unit (22) for filtering water flowing from the first end (12) to the second end (14) and a first anti-pollution check valve (24) for preventing water from flowing from the second end (14) to the first end (12),
**characterized by**
a first junction (16) located in the first duct (10) between the first end (12) and the first anti-pollution check valve (24) and a second junction (18) located in the first duct (10) between the first anti-pollution check valve (24) and the second end (14),
a second duct (30) connecting the first junction (16) and the second junction (18),
a second filter unit (42) in the second duct (30) for filtering water flowing from the second junction (18) to the first junction (16) and
a second anti-pollution check valve (44) in the second duct (30) for preventing water from flowing from the first junction (16) to the second junction (18).

2. Backflow safeguard unit (100) according to claim 1,
**characterized in that** the second junction (18) is located in the first duct (10) between the first anti-pollution check valve (24) and the first filter unit (22).

3. Backflow safeguard unit (100) according to claim 1,
**characterized in that** the first filter unit (22) is located in the first duct (10) between the first anti-pollution check valve (24) and the second junction (18).

4. Backflow safeguard unit (100) according to any of the preceding claims,
**characterized in that** the second anti-pollution check valve (44) is located in the second duct (30) next to the first junction (16).

5. Backflow safeguard unit (100) according to any of the preceding claims,
**characterized by** a throttle (32) located in the second duct (30) next to the second junction (18).

6. Backflow safeguard unit (100) according to any of the preceding claims,
**characterized in that** at least one of the filter units (22, 42) is a mechanical filter unit.

7. Backflow safeguard unit (100) according to any of the preceding claims,
**characterized in that** the first filter unit (22) has a pore size of < 80 µm.

8. Backflow safeguard unit (100) according to any of the preceding claims,
**characterized in that** at least one of the filter units (22, 42) is a microbiological filter unit.

9. Backflow safeguard unit (100) according to any of the preceding claims,
**characterized in that** the second filter unit (42) has a pore size of < 0.2 µm.

10. Backflow safeguard unit (100) according to any of claims 1 to 8 or 9,
**characterized in that** the filter units (22, 42) are identical.

11. Backflow safeguard unit (100) according to any of the preceding claims,
**characterized in that** at least one of the anti-pollution check valves (24, 44) is a single anti-pollution check valve.

12. Backflow safeguard unit (100) according to any of the preceding claims,
**characterized in that** at least one of the anti-pollution check valves (24, 44) is a non-controllable anti-pollution check valve.

13. Backflow safeguard unit (100) according to any of the preceding claims,
**characterized in that** the anti-pollution check valves (24, 44) are identical.

14. Combination of a water appliance (50) and a backflow safeguard unit (100) according to any of the preceding claims.

## Patentansprüche

1. Rückflussschutzeinheit (100) für ein Wassergerät (50) mit
einer ersten Leitung (10), die ein erstes Ende (12) aufweist, das mit einer Wasserversorgung (60) verbunden werden kann, und ein zweites Ende (14), das mit dem Wassergerät (50) verbunden werden kann, und mit
einer ersten Sicherheitseinheit (20), die sich in der ersten Leitung (10) befindet, mit einer ersten Filtereinheit (22) zum Filtern von Wasser, das vom ersten Ende (12) zum zweiten Ende (14) fließt, und einem ersten Verschmutzungsschutz-Rückschlagventil (24), um zu verhindern, dass Wasser vom zweiten Ende (14) zum ersten Ende (12) fließt,
**gekennzeichnet durch**
eine erste Abzweigung (16), die sich in der ersten Leitung (10) zwischen dem ersten Ende (12) und dem ersten Verschmutzungsschutz-Rückschlagventil (24) befindet, und einer zweiten Abzweigung (18), die sich in der ersten Leitung (10) zwischen dem ersten Verschmutzungsschutz-Rückschlagventil (24) und dem zweiten Ende (14) befindet,
eine zweite Leitung (30), die die erste Abzweigung (16) und die zweite Abzweigung (18) verbindet,
eine zweite Filtereinheit (42) in der zweiten Leitung (30) zum Filtern von Wasser, das von der zweiten Abzweigung (18) zur ersten Abzweigung (16) fließt, und
ein zweites Verschmutzungsschutz-Rückschlagventil (44) in der zweiten Leitung (30), um zu verhindern, dass Wasser von der ersten Abzweigung (16) zur zweiten Abzweigung (18) fließt.

2. Rückflussschutzeinheit (100) nach Anspruch 1,
**dadurch gekennzeichnet, dass** sich die zweite Abzweigung (18) in der ersten Leitung (10) zwischen dem ersten Verschmutzungsschutz-Rückschlagventil (24) und der ersten Filtereinheit (22) befindet.

3. Rückflussschutzeinheit (100) nach Anspruch 1,
**dadurch gekennzeichnet, dass** sich die erste Filtereinheit (22) in der ersten Leitung (10) zwischen dem ersten Verschmutzungsschutz-Rückschlagventil (24) und der zweiten Abzweigung (18) befindet.

4. Rückflussschutzeinheit (100) nach einem der vorstehenden Ansprüche,
**dadurch gekennzeichnet, dass** sich das zweite Verschmutzungsschutz-Rückschlagventil (44) in der zweiten Leitung (30) neben der ersten Abzweigung (16) befindet.

5. Rückflussschutzeinheit (100) nach einem der vorstehenden Ansprüche,
**gekennzeichnet durch** eine Drossel (32), die sich in der zweiten Leitung (30) neben der zweiten Abzweigung (18) befindet.

6. Rückflussschutzeinheit (100) nach einem der vorstehenden Ansprüche,
**dadurch gekennzeichnet, dass** es sich bei mindestens einer der Filtereinheiten (22, 42) um eine mechanische Filtereinheit handelt.

7. Rückflussschutzeinheit (100) nach einem der vorstehenden Ansprüche,
**dadurch gekennzeichnet, dass** die erste Filtereinheit (22) eine Porengröße von < 80 µm aufweist.

8. Rückflussschutzeinheit (100) nach einem der vorstehenden Ansprüche,
**dadurch gekennzeichnet, dass** es sich bei mindestens einer der Filtereinheiten (22, 42) um eine mikrobiologische Filtereinheit handelt.

9. Rückflussschutzeinheit (100) nach einem der vorstehenden Ansprüche,
**dadurch gekennzeichnet, dass** die zweite Filtereinheit (42) eine Porengröße von < 0,2 µm aufweist.

10. Rückflussschutzeinheit (100) nach einem der Ansprüche 1 bis 8 oder 9,
**dadurch gekennzeichnet, dass** die Filtereinheiten (22, 42) identisch sind.

11. Rückflussschutzeinheit (100) nach einem der vorstehenden Ansprüche,
**dadurch gekennzeichnet, dass** es sich bei mindestens einem der Verschmutzungsschutz-Rückschlagventile (24, 44) um ein einzelnes Verschmutzungsschutz-Rückschlagventil handelt.

12. Rückflussschutzeinheit (100) nach einem der vorstehenden Ansprüche,
**dadurch gekennzeichnet, dass** es sich bei mindestens einem der Verschmutzungsschutz-Rückschlagventile (24, 44) um ein nicht steuerbares Verschmutzungsschutz-Rückschlagventil handelt.

13. Rückflussschutzeinheit (100) nach einem der vorstehenden Ansprüche,
**dadurch gekennzeichnet, dass** die Verschmutzungsschutz-Rückschlagventile (24, 44) identisch sind.

14. Kombination aus einem Wassergerät (50) und einer Rückflussschutzeinheit (100) nach einem der vorstehenden Ansprüche.

## Revendications

1. Unité de protection antirefoulement (100) pour un appareil à eau (50) avec
un premier conduit (10) présentant une première extrémité (12) pouvant être raccordée à une alimentation en eau (60) et une seconde extrémité (14) pouvant être raccordée à l'appareil à eau (50) et avec
une première unité de sécurité (20) située dans ledit premier conduit (10) avec une première unité de filtration (22) pour filtrer l'eau s'écoulant depuis la première extrémité (12) vers la seconde extrémité (14) et un premier clapet anti-retour anti-pollution (24) pour empêcher l'eau de s'écouler depuis la seconde extrémité (14) vers la première extrémité (12),
**caractérisée par**
une première jonction (16) située dans le premier conduit (10) entre la première extrémité (12) et le premier clapet anti-retour anti-pollution (24) et une seconde jonction (18) située dans le premier conduit (10) entre le premier clapet anti-retour anti-pollution (24) et la seconde extrémité (14),
un second conduit (30) raccordant la première jonction (16) et la seconde jonction (18),
une seconde unité de filtration (42) dans le second conduit (30) pour filtrer l'eau s'écoulant depuis la seconde jonction (18) vers la première jonction (16) et
un second clapet anti-retour anti-pollution (44) dans le second conduit (30) pour empêcher l'eau de s'écouler depuis la première jonction (16) vers la seconde jonction (18).

2. Unité de protection antirefoulement (100) selon la revendication 1,
**caractérisée en ce que** la seconde jonction (18) est située dans le premier conduit (10) entre le premier clapet anti-retour anti-pollution (24) et la première unité de filtration (22).

3. Unité de protection antirefoulement (100) selon la revendication 1,
**caractérisée en ce que** la première unité de filtration (22) est située dans le premier conduit (10) entre le premier clapet anti-retour anti-pollution (24) et la seconde jonction (18).

4. Unité de protection antirefoulement (100) selon l'une quelconque des revendications précédentes,
**caractérisée en ce que** le second clapet anti-retour anti-pollution (44) est situé dans le second conduit (30) à côté de la première jonction (16).

5. Unité de protection antirefoulement (100) selon l'une quelconque des revendications précédentes,
**caractérisée par** un étranglement (32) situé dans le second conduit (30) à côté de la seconde jonction (18).

6. Unité de protection antirefoulement (100) selon l'une quelconque des revendications précédentes,
**caractérisée en ce qu'**au moins l'une des unités de filtration (22, 42) est une unité de filtration mécanique.

7. Unité de protection antirefoulement (100) selon l'une quelconque des revendications précédentes,
**caractérisée en ce que** la première unité de filtration (22) présente une taille de pore < 80 µm.

8. Unité de protection antirefoulement (100) selon l'une quelconque des revendications précédentes,
**caractérisée en ce qu'**au moins l'une des unités de filtration (22, 42) est une unité de filtration microbiologique.

9. Unité de protection antirefoulement (100) selon l'une quelconque des revendications précédentes,
**caractérisée en ce que** la seconde unité de filtration (42) présente une taille de pore < 0,2 µm.

10. Unité de protection antirefoulement (100) selon l'une quelconque des revendications 1 à 8 ou 9,
**caractérisée en ce que** les unités de filtration (22, 42) sont identiques.

11. Unité de protection antirefoulement (100) selon l'une quelconque des revendications précédentes,
**caractérisée en ce qu'**au moins l'un des clapets anti-retour anti-pollution (24, 44) est un unique clapet anti-retour anti-pollution.

12. Unité de protection antirefoulement (100) selon l'une quelconque des revendications précédentes,
**caractérisée en ce qu'**au moins l'un des clapets anti-retour anti-pollution (24, 44) est un clapet anti-retour anti-pollution ne pouvant pas être commandé.

13. Unité de protection antirefoulement (100) selon l'une quelconque des revendications précédentes,
**caractérisée en ce que** les clapets anti-retour anti-pollution (24, 44) sont identiques.

14. Combinaison d'un appareil à eau (50) et d'une unité de protection antirefoulement (100) selon l'une quelconque des revendications précédentes.
